(19) Europäisches Patentamt

European Patent Office

Office européen des brevets

(11) **EP 1 806 569 A1**

(12) **EUROPEAN PATENT APPLICATION**

(43) Date of publication:
**11.07.2007 Bulletin 2007/28**

(51) Int Cl.:
***G01L 9/00*** *(2006.01)*

(21) Application number: **06250078.0**

(22) Date of filing: **09.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Infineon Technologies SensoNor AS 3192 Horten (NO)**

(72) Inventor: **Kvisteroy, Terje 3192 Horten (NO)**

(74) Representative: **Haley, Stephen
Gill Jennings & Every LLP
Broadgate House
7 Eldon Street
London EC2M 7LH (GB)**

(54) **Inductive-capactive sensor**

(57)    An inductive-capacitive sensor comprises at least one conductive plate attached, in use, to a first electrically insulating substrate a micromachined structure formed from a semiconductor material, the micromachined structure and the first substrate being positioned such that a capacitive element is formed, in use, between the conductive plate and the micromachined structure. An inductor is attached, in use, to the first substrate, the inductor being electrically connected to the conductive plate and to the micromachined structure, such that an inductive-capacitive circuit is generated in the sensor. The sensor is arranged such that changes in a resonance frequency of the inductive-capacitive circuit can be determined, in use, via an external reader circuit, the changes being indicative of changes in a parameter to be sensed. The sensor further comprises means for hermetically sealing, in use, the first substrate and the micromachined structure in order to enclose the capacitive element and the inductor.

Figure 1a

EP 1 806 569 A1

## Description

The present invention relates to an inductive-capacitive (LC) sensor.

Sensors are increasingly employed in a variety of fields, including areas such as medical instrumentation, automotive applications such as engine control and tyre pressure monitoring, industrial process control and the avionics industry. Capacitive elements in sensors are increasingly used for measuring variables such as pressure. In combination with a coil, such variables are determinable by a change in the resonance frequency of an LC-circuit, defined by the capacitor and the inductor within the sensor.

Sensors employed in harsh environments are normally monitored by a remote reader circuit (amplifiers and converters) separated from the measurement environment, and use contact based feed throughs to connect the media side (sensor) to the electronic side (reader circuit or ECU (Electronic Control Unit)). Examples of such connections are metal-through-glass feed throughs from a high pressure and corrosive liquid/gas media to the electronics in a pressure transducer. Current LC-resonator sensors are often made using more conventional means such as wound coils, metal diaphragms and metal packages.

Current LC-sensors are not very robust and lack reliability and simplicity due to features of the traditional technology mentioned above.

The present invention seeks to solve, or at least ameliorate, the above disadvantages by providing an inductive-capacitive sensor comprising:

at least one conductive plate attached, in use, to a first electrically insulating substrate;
a micromachined structure formed from a semiconductor material, the micromachined structure and the first substrate being positioned such that a capacitive element is formed, in use, between the conductive plate and the micromachined structure; and
an inductor attached, in use, to the first substrate, the inductor being electrically connected to the conductive plate and to the micromachined structure, such that a inductive-capacative circuit is generated in the sensor;

wherein the sensor is arranged such that changes in a resonance frequency of the inductive-capacitive circuit can be determined, in use, via an external reader circuit, the changes being indicative of changes in a parameter to be sensed, the sensor further comprising:

means for hermetically sealing, in use, the first substrate and the micromachined structure to define a cavity containing the capacitive element and to seal the inductor.

The invention provides a sensor that is wireless and hermetically sealed in order that the sensor can be arranged in the media side of a sensing system, separated from an ECU in the electronic side of such a system.

Use of the LC-sensor of the present invention makes complex electronic system solutions more robust, more reliable and less costly by using a wireless concept, thus making connectors and plugs obsolete, and providing simpler and more reliable isolation from the media side to the electronic side, since no feed throughs are needed. Suitable combinations of the inductance and capacitance values allow employment of the LC-sensor in a variety of fields. A hermetic seal for the LC-resonator can be realised on standard MEMS bonding (lamination) technology using a combination of glass and silicon and/or of ceramics material and silicon.

Examples of the present invention will now be described with reference to the accompanying drawings, in which:

Figures 1a to 1d show examples of an inductive-capacitive (LC) sensor according to the present invention;
Figure 1e shows a more detailed image of a pressure sensitive capacitor used in the LC-sensors of figures 1a to 1d;
Figure 2a illustrates an electrical model of a reader circuit in combination with an LC-resonator circuit of the LC-sensor according to the present invention;
Figure 2b shows an equivalent circuit to the electrical model of figure 2a;
Figure 3 shows examples of the packaging and assembly of the LC-sensor;
Figure 4a illustrates additional examples of the use of a series capacitor and isolation layer in the LC-sensor;
Figure 4b illustrates on electrical model of the arrangement of figure 4a.
Figure 5 illustrates the additional of an electroplated or ferrite layer to the LC-sensor;
Figure 6 shows examples of the LC-sensor in combination with a reader circuit such as a remote ECU or a more integrated solution constituting a transducer; and
Figure 7 illustrates the use of multiple LC-sensors in combination with a common reader coil.

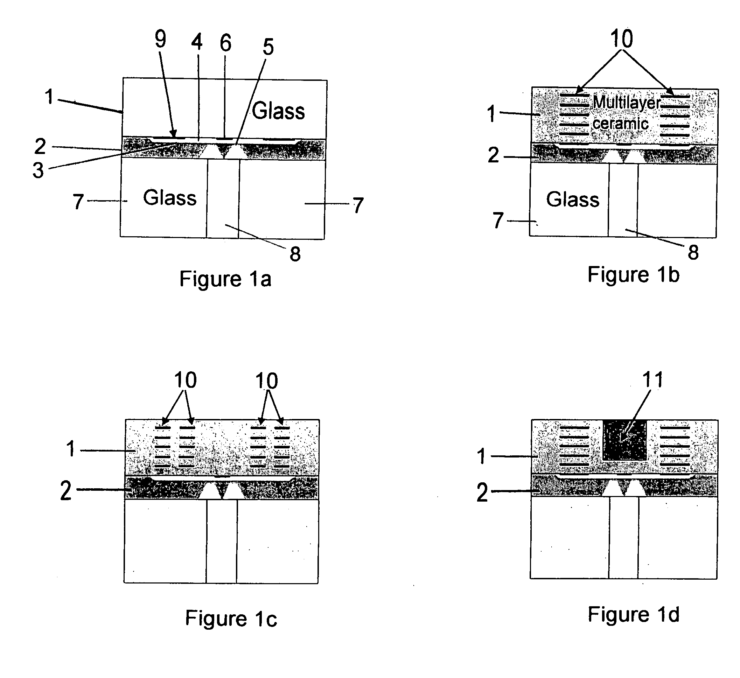

Figure 1a shows a first glass substrate 1 which is attached to a micromachined structure 2 by, for example, anodic bonding. The micromachined structure is formed from a semiconductor material, which is typically silicon-based, and is formed with a recess 3 such that, upon bonding of the semiconductor structure to the glass substrate, an enclosed cavity 4 is formed therein. The micromachined structure 2 is typically a silicon diaphragm that acts as a moveable electrode, and forms a capacitor with a conductive plate 6 attached to glass substrate 1. Such a capacitive arrangement is key to the measurement of physical variables such as pressure, flow and acceleration in the LC-sensor of the present invention.

Further glass substrates 7 may be provided to support the micormachined structure 2, and are arranged such that a channel 8 is formed. This channel 8 allows an external force to act on the flexible structure of the capacitive diaphragm 5, thereby deflecting the diaphragm 5 towards the conductive plate 6 and hence reducing the gap of the capacitor.

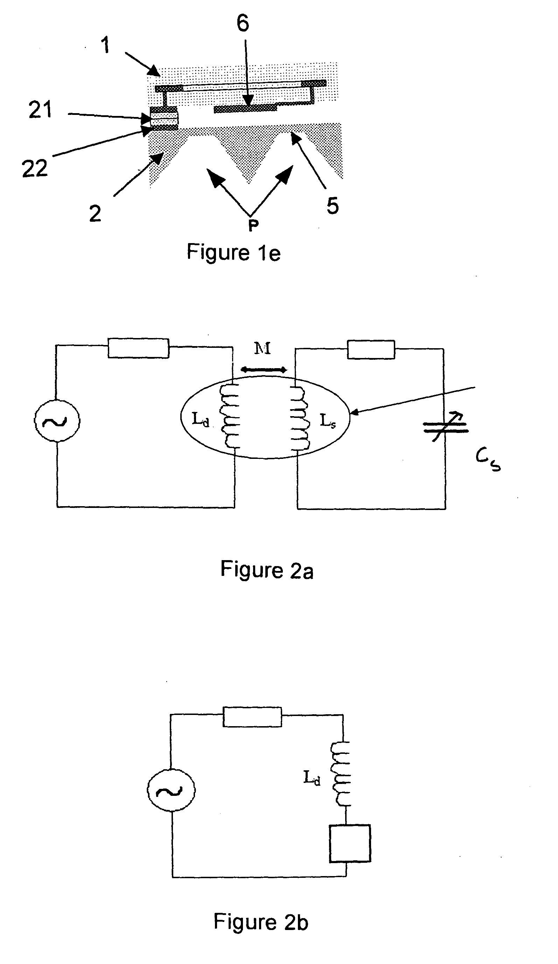

An inductor 9, such as a surface inductor as illustrated in figure 1a, is also provided on the glass substrate 1. As shown in figures 1b to 1d, substrate 1 can alternatively be formed of a material such as ceramic and the inductor can take the form of an embedded coil 10 (as shown in figure 1 b), which may have multiple turns within a plane (figure 1c). As illustrated in figure 1d, a ferrite core 11 can be embedded in the substrate in an alternative example of the sensor, which affects the permeability upon which the inductance is dependent. The magnetic induction in the centre of a coil is proportional with the permeability. Such arrangement will enhance the performance of the LC-sensor since both the self-inductance (the inductance value that affects the response frequency and must have a reasonably large value in comparison with the parasitic inductances) and the mutual inductance (the inductance value that controls a coupling between the LC-sensor and an external reader coil and thereby decides the signal-to-noise ratio) are proportional to the permeability, which can be raised by orders of magnitude by the use of ferromagnetic materials.

As can be seen from Figures 1 a to 1d, the sensor structure is such that no external connections are required, and the components of the sensor can be hermetically embedded. The sensor structure is preferably built using direct bonding, with no use of adhesive materials. The above features provide a more robust and reliable sensor.

Further details of the capacitive sensing arrangement are shown in figure 1e. A conductive plate 6 that is, for example, made from metal thin film by sputtering, by chemical vapour deposition or by one of these techniques in combination with electroplating, can be coupled directly with the surface inductor 9 (which is typically made by the same means as the conductive plate 6) or directly with the embedded coil 10 when using a ceramic (for example, a multilayer ceramic process can provide both the surface conductor as well as the coupling to the embedded coil layers). Depending on the material used on the glass or ceramic, a more ductile material layer 21 can be applied (for example of gold or aluminium) and will form an electrical contact between the coil 10 and the micromachined structure 2 and conductive plate 6 by the pressure resulting from the direct bonding when using suitable dimensions for the layer 21. A similar metal structure 22 of, for example, silicon is provided on the micromachined structure 2 to form an electrical contact to this conductive material.

Using the example of a change in pressure given above, it can be seen that a pressure applied to the diaphragm 5 of the capacitor will cause the gap between the diaphragm 5 and the conductive plate 6 to decrease as the diaphragm 5 is deflected, thereby increasing the capacitance. This increase in capacitance in turn decreases the resonance frequency for the LC-circuit due to the values of the inductor and capacitor. Such a change in the resonance frequency can be used to determine the pressure change.

The above concept is more readily understood by the electrical model of figure 2a, in which the right hand side of the circuit represents the LC-sensor of the present invention, while the left hand side of the circuit represents a reader circuit which includes a reader coil with inductance $L_d$. Inductive coupling between the reader coil and the sensor coil (inductor $L_s$) generates a mutual inductance M between the two coils. The equivalent circuit to the electrical model of figure 2a is shown in figure 2b. Changes in the resonance frequency of the LC-sensor circuit (caused by a change in the capacitance thereof) generate changes in the impedance of the reader circuit, and hence changes in the parameter being detected by the sensor can be detected.

It can therefore be seen that the example of figure 1a gives relatively low values for the inductance of the LC-circuit inductor $L_s$ and the mutual inductance M, while the LC-sensor of the example of figure 1 b is preferable for higher values of $L_s$ and M.

The LC-sensor of the present invention is typically between 3mm and 5mm in height and between 3mm and 5mm in width and depth, however the precise dimensions of the sensor will, to a certain extent, depend on the specific components used and the application thereof.

One of the advantages of the LC-sensor is its hermeticity and therefore the possibility for direct immersion into the measurement media (e.g. corrosive agents). However, depending on the application a seal may be needed when mounting the sensor.

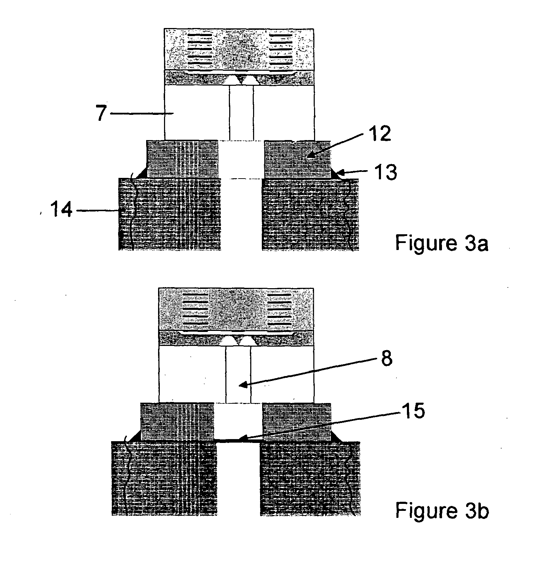

Figures 3a and 3b show possible mounting techniques for the LC-sensor. In figure 3a, a substrate 12 of, for example, an alloy such as kovar, an alloy with an expansivity equivalent to that of glass, may be bonded to glass substrate 7 via an anodic glass-metal bond. This kovar substrate 12 is then laser-welded (13) to the device 14 from which the pressure is to be sensed. As shown in figure 3b an isolating diaphragm 15 is preferably provided at the base of channel 8 (which can extend through the kovar substrate 12), in cases where extra protection from the media is needed, such that a deflection of the diaphragm 5 causes a deflection in the micromachined structure 2. Channel 8 is typically filled with a pressure-sensitive medium such as silicone oil.

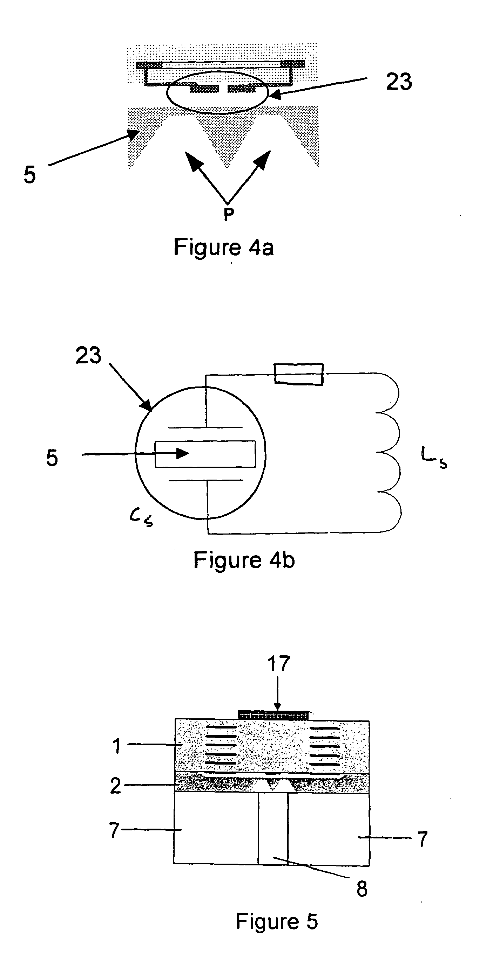

The example of figure 4a illustrates a series capacitor in the form of a plurality of conductive plates 23, which is employed to avoid the need for electrical contact to the semiconductor structure. The LC-circuit in this example is isolated from the semiconductor substrate 2. This may be favourable where the sensor is used directly in a conductive media. Figure 4b illustrates the electrical model of this multiple condensator solution.

The sensor of figure 5 illustrates the use of an additional, optional layer 17 of ferrite material (e.g. electroplated or sputtered) that is used to trim (e.g. by laser abbreviation) the resonance frequency. This is the case due to the relationship:

$$\omega = \frac{1}{\sqrt{LC}}$$

where C is the capacitance and $\omega$ is the resonance frequency, and where L is dependent on $\mu$, the permeability provided by the ferrite.

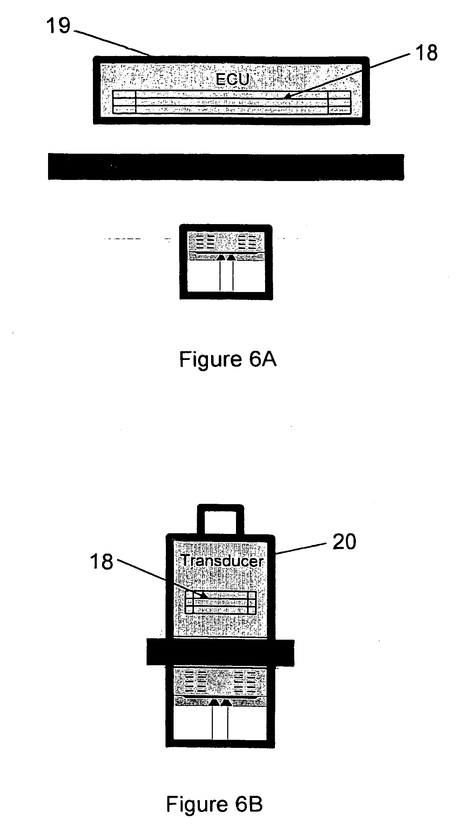

Figures 6a and 6b illustrate a system incorporating an LC-sensor according to the present invention in which the LC-sensor on a "media side" is separated from a reader coil 18 within an ECU 19 on an "electronic side" of an application (figure 6a) or as part of a transducer 20 (figure 6b). As mentioned previously, inductive coupling between the LC-sensor and the reader coil 18 allows the determination of any changes in the parameter to be sensed by the components on the electronic side of the system. Such a wireless system allows simple and reliable isolation of the LC-sensor from the electronic side of the system, allowing hermetic sealing of the components of the sensor and thus providing a more robust and compact sensor.

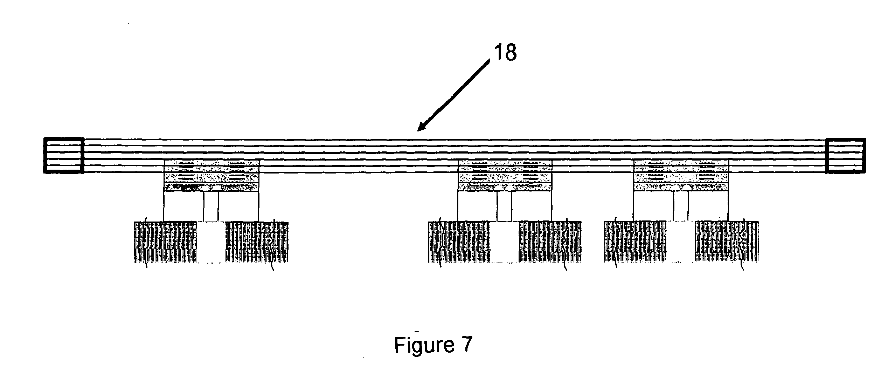

Figure 7 shows an example of a system in which multiple LC-sensors according to the present invention are employed in, for example, a high pressure environment. The reader coil 18 in such a system is preferably a common coil as illustrated, providing simple and comprehensive reading by the ECU 19 in the electronic side.

The LC-sensor of the present invention uses a combination of, for example, glass/semiconductor material with a planar coil or ceramic/semiconductor material and a multilayer embedded coil in order to provide a cheaper, more compact and more robust LC-sensor with increased reliability. The concept of hermetically sealing the sensor components is key to these advantages.

**Claims**

1. An inductive-capacitive sensor comprising:

   at least one conductive plate attached, in use, to a first electrically insulating substrate; a micromachined structure formed from a semiconductor material, the micromachined structure and the first substrate being positioned such that a capacitive element is formed, in use, between the conductive plate and the micromachined structure; and
   an inductor attached, in use, to the first substrate, the inductor being electrically connected to the conductive plate and to the micromachined structure, such that a inductive-capacative circuit is generated in the sensor;

   wherein the sensor is arranged such that changes in a resonance frequency of the inductive-capacitive circuit can be determined, in use, via an external reader circuit, the changes being indicative of changes in a parameter to be sensed, the sensor further comprising:

   means for hermetically sealing, in use, the first substrate and the micromachined structure in order to enclose the capacitive element and the inductor.

2. A sensor according to claim 1, wherein the micromachined substrate is formed from silicon.

3. A sensor according to claim 1 or 2, the sensor further comprising:

   a second electrically insulating substrate, a first side of which is attached to the micromachined structure; and
   a diaphragm arranged to deflect, in use, in response to a force acting thereon,

   wherein the second substrate is arranged to provide a channel between the diaphragm and the micromachined structure, such that a deflection of the diaphragm causes a deflection in the micromachined structure.

4. A sensor according to claim 3, the sensor further comprising a kovar layer element attached to another side of the second substrate and arranged such that the sensor can be attached, in use, to a device from which the variable is to be sensed.

5. A sensor according to any preceding claim, the sensor further comprising two conductive plates spaced apart from one another, each of the conductive plates being attached, in use, to the first electrically insulating substrate, wherein the inductor is electrically connected to each conductive plate such that two capacitive elements are formed, in use, between the respective conductive plates and the micromachined structure.

6. A sensor according to any preceding claim, the sensor further comprising a layer of ferrite material arranged on a surface of the first substrate other than that which forms the cavity.

7. A sensor according to any preceding claim, wherein the inductor of the sensor is inductively coupled, in use, to an inductor of an external reader circuit.

8. A sensor according to any preceding claim, wherein the first substrate is formed from ceramics material.

9. A sensor according to any preceding claim, wherein the inductor is a multilayered coil embedded in the first substrate.

10. A sensor according to any preceding claim, the sensor further comprising a ferrite core embedded in the first substrate.

11. A sensor according to any of claims 1 to 7, wherein the first substrate is formed from glass.

12. A sensor according to any of claims 1 to 7, wherein the inductor is a surface inductor.

13. A sensing system comprising:

an inductive-capacitive sensor according to any preceding claim; and
a reader circuit external to the sensor, the reader circuit comprising an inductor arranged to be inductively coupled, in use, to the inductor of the sensor,
the reader circuit being arranged to determine, in use, changes in the resonance frequency of the sensor.

Figure 1b

Figure 1d

Figure 1a

Figure 1c

Figure 1e

Figure 2a

Figure 2b

Figure 3a

Figure 3b

Figure 4a

Figure 4b

Figure 5

19

18

ECU

Figure 6A

20

18

Transducer

Figure 6B

Figure 7

EP 1 806 569 A1

**European Patent Office**

**EUROPEAN SEARCH REPORT**

Application Number

EP 06 25 0078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/103112 A1 (PEDERSEN MICHAEL ET AL) 19 May 2005 (2005-05-19) | 1-3,7,9, 11,13 | G01L9/00 |
| A | * page 2, right-hand column, lines 4,5 * <br> * page 2, right-hand column, lines 11-14 * <br> * page 1, paragraph 6 * <br> * page 1, paragraph 10 * <br> * page 1, paragraph 12 * <br> * paragraph 25 - sentences 7,8 * <br> * figures 2-5 * <br> ----- | 2-5 | |
| A | US 6 891 711 B1 (KURTZ ANTHONY D) 10 May 2005 (2005-05-10) <br> * the whole document * <br> ----- | 1-13 | |
| A | BALDI A ET AL: "A SELF-RESONANT FREQUENCY-MODULATED MICROMACHINED PASSIVE PRESSURE TRANSENSOR" <br> IEEE SENSORS JOURNAL, IEEE SERVICE CENTER, NEW YORK, NY, US, <br> vol. 3, no. 6, December 2003 (2003-12), pages 728-733, XP001047496 <br> ISSN: 1530-437X <br> * figure 1 * <br> ----- | 6 | TECHNICAL FIELDS SEARCHED (IPC) <br><br> G01L |
| A | PARK E-C ET AL: "HERMETICALLY SEALED INDUCTOR-CAPACITOR (LC) RESONATOR FOR REMOTE PRESSURE MONITORING" <br> JAPANESE JOURNAL OF APPLIED PHYSICS, JAPAN SOCIETY OF APPLIED PHYSICS, TOKYO, JP, <br> vol. 37, no. 12B, December 1998 (1998-12), pages 7124-7128, XP000880302 <br> ISSN: 0021-4922 <br> * the whole document * <br> ----- <br> -/-- | 1-13 | |

The present search report has been drawn up for all claims

| Place of search | Date of completion of the search | Examiner |
|---|---|---|
| Munich | 31 March 2006 | Dogueri, A. K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 806 569 A1

**European Patent Office**

**EUROPEAN SEARCH REPORT**

**Application Number**

EP 06 25 0078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AKAR O ET AL: "A wireless batch sealed absolute capacitive pressure sensor" SENSORS AND ACTUATORS A, ELSEVIER SEQUOIA S.A., LAUSANNE, CH, vol. 95, no. 1, 15 December 2001 (2001-12-15), pages 29-38, XP004328628 ISSN: 0924-4247 * the whole document * ----- | 1-13 | |
| A | TAKAHATA K ET AL: "A wireless microsensor for monitoring flow and pressure in a blood vessel utilizing a dual-inductor antenna stent and two pressure sensors" MICRO ELECTRO MECHANICAL SYSTEMS, 2004. 17TH IEEE INTERNATIONAL CONFERENCE ON. (MEMS) MAASTRICHT, NETHERLANDS 25-29 JAN. 2004, PISCATAWAY, NJ, USA,IEEE, US, 25 January 2004 (2004-01-25), pages 216-219, XP010767867 ISBN: 0-7803-8265-X * abstract; figures 1,7 * ----- | 1-13 | **TECHNICAL FIELDS SEARCHED (IPC)** |

The present search report has been drawn up for all claims

| Place of search | Date of completion of the search | Examiner |
|---|---|---|
| Munich | 31 March 2006 | Dogueri, A. K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 25 0078

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2006

| Patent document cited in search report | | Publication date | Patent family member(s) | | Publication date |
|---|---|---|---|---|---|
| US 2005103112 | A1 | 19-05-2005 | AU 2003253656 A1<br>WO 03106952 A2<br>US 2004057589 A1<br>US 2005028601 A1 | | 31-12-2003<br>24-12-2003<br>25-03-2004<br>10-02-2005 |
| US 6891711 | B1 | 10-05-2005 | NONE | | |

EPO FORM P0459

For more details about this annex : see Official Journal of the European Patent Office, No. 12/82